# EUROPEAN PATENT APPLICATION

(11) **EP 1 219 697 A1**
(43) Date of publication of application: **03.07.2002**
(21) Application number: 00949971.6
(22) Date of filing: 03.08.2000
(51) Int. Cl.: C10B 53/00, C10L 5/46, B09B 3/00, C01B 31/08, B01D 53/74

(54) **METHOD FOR TREATING COMBUSTIBLE WASTE**

(30) Priority: 04.08.1999 JP 22088499; 04.08.1999 JP 22088399; 08.10.1999 JP 28756699; 06.06.2000 JP 2000169092
(71) Applicant: NKK CORPORATION, Tokyo 100-0005 (JP)
(72) Inventor: Ueno, Ichiro NKK Corporation, Tokyo 100-0005 (JP); Okada, Toshihiko NKK Corporation, Tokyo 100-0005 (JP); Ariyama, Tatsuro NKK Corporation, Tokyo 100-0005 (JP); Anyashiki, Takashi NKK Corporation, Tokyo 100-0005 (JP); Rokugawa, Shoichi NKK Corporation, Tokyo 100-0005 (JP); Ishii, Jun NKK Corporation, Tokyo 100-0005 (JP)
(74) Representative: HOFFMANN - EITLE
(86) International application number: JP0005207
(87) International publication number: WO0110978

(57) **Abstract**

A method for treating combustible wastes comprises the steps of: carbonizing combustible wastes to produce carbonized products and a combustible gas; contacting an exhaust gas from a process with said carbonized products to purify the exhaust gas; and recovering the carbonized products in the exhaust gas. The carbonizing is carried out at a temperature of 400°C or higher.

## Description

### FIELD OF THE INVENTION

The present invention relates to a method for treating combustible wastes. More particularly, it relates to a method for treating combustible wastes without producing harmful substances such as HCl and dioxin.

### DESCRIPTION OF THE RELATED ARTS

At present, combustible wastes are generally used effectively as a boiler fuel, fuel for manufacturing cement, fuel for power generation, etc., or used for land reclamation. Also, as a special mode of combustible wastes, a refuse derived fuel (RDF) is known. The refuse derived fuel is a fuel that is formed by solidifying combustible wastes so as to be capable of being reused as a fuel resource. The refuse derived fuel is thought to be promising as a substitute for fossil fuel because of ease of storage and transportation and stabilized properties, and its use as boiler fuel, fuel for manufacturing cement, fuel for power generation, etc. has been studied.

However, there have been pointed out problems in that the degradation in cement quality due to chorine contained in combustible wastes including an RDF and the existence of HCl (hydrogen chloride) in combustion gas cause a boiler tube to corrode and power generation efficiency to decrease, and that dioxin is contained in exhaust gas and dust. In addition, the final treatment of ash containing by-product heavy metals is needed separately. Also, in order to effectively use combustible wastes, auxiliary facilities and processes for exhaust gas treatment, dust and ash treatment, etc. are needed separately.

Also, in recent years, technologies for manufacturing activated charcoal from combustible wastes and effectively using it have been developed. For example, JP-A-9-208963, (the term "JP-A" referred to herein signifies "Unexamined Japanese Patent Publication") has disclosed a technology for manufacturing inexpensive activated charcoal from industrial wastes.

At present, however, the use of the obtained activated charcoal is restricted because of impurities such as chlorine, ash, and heavy metals contained in combustible wastes including an RDF. Specifically, even if chlorine is removed in the carbonization process, the manufactured activated charcoal contains ash and heavy metals in ash, which poses a problem of the dissolution of heavy metals, so that it cannot be used for water treatment. Also, the combustible wastes that are a basic raw material for activated charcoal have various shapes, and also they are powdered in the carbonization process, so that the shape of the obtained activated charcoal is unfixed. This is one reason why the use of activated charcoal is restricted.

### SUMMARY OF THE INVENTION

It is an object of the present invention to provide a method for effectively using combustible wastes as a fuel without discharging harmful substances such as HCl, dioxin, and heavy metals.

To achieve the object, the present invention provides a method for treating combustible wastes, comprising the steps of subjecting the combustible wastes to carbonization to obtain carbonized products and combustible gas; and using the carbonized products to purify exhaust gas from a process.

The combustible wastes contain at least one selected from the group consisting of paper and plastics. The combustible wastes may further contain at least one selected from a group consisting of coal, coal tar, pitch, activated sludge, and oil-based residue. Also, the combustible wastes may further contain at least one selected from a group consisting of mill scales and dust of an electric dust collector.

The combustible wastes may be a refuse derived fuel (RDF).

The step of carbonization comprises subjecting the combustible wastes to carbonization at a carbonization temperature of 400°C or higher. The combustible wastes are preferably subjected to carbonization at a carbonization temperature of 600°C or higher.

In order to remove a volatile matter in the carbonize products, the combustible wastes may be subjected to carbonization at a carbonization temperature of 1000 to 1300°C. The content of volatile matter in the carbonized products is preferably 1 wt% or lower. The step of carbonization preferably consists of subjecting the combustible wastes to carbonization in an inert atmosphere. The carbonized products obtained by carbonization may be activated. The activation increases the specific surface area and pore diameter of the carbonized products.

The carbonized products are blown into exhaust gas from a process to purify the exhaust gas. The exhaust gas from a process is preferably exhaust gas from one process selected from a group consisting of a refuse incinerator, electric power plant, steel-making electric furnace, scrap melting furnace, and sintering machine for manufacturing iron.

The recovered carbonized products can be used as a fuel or a raw material. Also, as a fuel, the carbonized products can be used for manufacturing sintered ore in a sintering machine for manufacturing iron. The combustible gas obtained in the step of carbonization is used as a heat source for carbonization or iron-manufacturing process.

Further, the present invention provides a method for treating combustible wastes, comprising the steps of subjecting the combustible wastes to preliminary carbonization; molding the preliminarily carbonized products; and subjecting the molded products to carbonization to produce carbonized products.

The preliminary carbonization is preferably carried out at a temperature of 300 to 800°C. The step of molding preferably comprises molding the preliminarily carbonized products by a briquetting machine to produce briquettes. The carbonization is preferably carried out at a temperature of 600 to 1000°C.

The combustible wastes may be combustible wastes containing a refuse derived fuel, or may be a refuse derived fuel. The combustible wastes preferably have an O/C atomicity ratio of 0.2 to 0.8 and an H/C atomicity ratio of 0.5 to 2.3.

The above-mentioned method for treating combustible wastes may further include the steps of disintegrating the preliminarily carbonized products; and removing iron and nonferrous metals from the disintegrated preliminarily carbonized products. Also, the above-mentioned method for treating combustible wastes may further include a step of adding and mixing a binder to and with the preliminarily carbonized products.

The carbonized products are used as an agent for treating exhaust gas. Granular carbonized products are returned to the step of molding the preliminarily carbonized products, or are used as a raw material blown as a fuel.

Further, the present invention provides a method for treating combustible wastes, comprising the steps of subjecting the combustible wastes to carbonization at a temperature of 500 to 1000°C; and obtaining carbonized products and carbonization gas after the carbonization. The carbonization is preferably carried out under a pressure of 0.5 to 50 MPa.

Also, the present invention provides a method for treating combustible wastes, comprising the steps of preparing a refuse derived fuel; subjecting the refuse derived fuel to carbonization at a temperature of 500 to 1000°C; and obtaining carbonized products and carbonization gas after the carbonization. The refuse derived fuel is preferably a refuse derived fuel impregnated with a binder.

### BRIEF DESCRIPTION OF THE DRAWINGS

FIG. 1 is a schematic view of an electric furnace used for subjecting combustible wastes to carbonization;
FIG. 2 is a diagram showing a test apparatus for evaluating adsorption performance;
FIG. 3 is a schematic view of a sintering test apparatus;
FIG. 4 is a schematic view showing a flow for manufacturing activated charcoal from combustible wastes;
FIG. 5 is a schematic view showing a construction of another electric tube furnace used for carbonization;
FIG. 6 is a diagram showing another test apparatus for evaluating adsorption performance;
FIG. 7 is a schematic view showing a method for manufacturing and using carbonized products;
FIG. 8 is a schematic view showing a flow for manufacturing carbonized products; and
FIG. 9 is a schematic view of an adsorption tower used for evaluating adsorption performance.

### EMBODIMENT FOR CARRYING OUT THE INVENTION

### Embodiment 1

Embodiment 1 is a method for treating combustible wastes, which is characterized in that combustible wastes are subjected to carbonization, and the obtained carbonized products are used to purify exhaust gas from a process.

In embodiment 1, the functionality of carbon matter in combustible components of combustible wastes is utilized. Specifically, by the carbonization of combustible wastes, combustible substances contained in the combustible wastes are carbonized into a porous matter. The reason for this is that in the carbonization process, bubbles are produced by the dehydration of cellulose contained in the combustible substances. The carbonized porous products have very high capability to adsorb harmful substances such as dioxin. Therefore, by blowing the carbonized products into exhaust gas from various processes, the exhaust gas can be purified. Also, by subjecting combustible wastes to carbonization, chlorine content contained in the combustible wastes can be removed. Since the carbonization process is usually carried out in an inert atmosphere, the production of dioxins is restrained.

The combustible wastes may contain waste coal powder and activated sludge generated in an iron mill.

The waste coal powder and activated sludge, which are iron mill wastes, have been treated conventionally by a sintering machine. However, it has been pointed out that chlorides and organic compounds contained in these wastes are a cause for producing dioxin. In this embodiment, since combustible wastes containing waste coal powder and activated sludge are subjected to carbonization, the production of dioxins is restrained as described above.

It is preferable that the recovered carbonized products be used as at least one of a heat source and a raw material in various processes. By using the combustible components in combustible wastes at two stages, the combustible wastes are used effectively. Specifically, at the first stage, the functionality of carbon matter is utilized to purify exhaust gas as described above. At the second stage, the carbonized products to which harmful substances have been adsorbed are used as at least one of a heat source and a raw material in various processes. Since the content of chlorine contained in the carbonized products is very low, the use of carbonized products as a heat source and/or a raw material does not cause HCl and dioxin to be produced. The dioxin adsorbed to the carbonized products is decomposed by combustion heat in various processes.

The content of volatile matter in the recovered carbonized products is preferably 5% by weight or smaller, more preferably being 1% by weight or smaller. If the content of volatile matter in the carbonized products is 5% by weight or smaller, the production of dioxin can be restrained when the carbonized products are used as a heat source and/or a raw material.

The recovered carbonized products are used as a heat source and/or a raw material.

In the application as a solid fuel, the use as a heat source for a sintering machine in an iron-manufacturing process is especially effective. The reasons for this are that the combustion temperature is about 1400°C at the maximum, so that the charged dioxin and its precursor are substantially decomposed, that ash is finally turned into slag (turned harmless) by a blast furnace, and that high-volume treatment can be carried out.

Regarding the temperature at which combustible wastes are subjected to carbonization, when the carbonized products are used as a raw material for a sintering machine, it is desirable to remove the volatile matter in the carbonized products, which causes dioxin to be produced, to the utmost, and therefore the carbonization temperature should preferably be set at a rather higher value, being 1000°C or higher.

It is preferable that mill scales generated in an iron mill and dust of an electric dust collector be treated by a carbonization furnace for subjecting combustible wastes to carbonization. Conventionally, mill wastes such as mill scales and dust of an electric dust collector have been treated by a sintering machine. However, it has been pointed out that chlorides and organic compounds contained in these wastes cause dioxin to be produced, which has posed a problem. In this embodiment, these mill wastes are subjected to carbonization in advance together with combustible wastes, and then are treated by the sintering machine, so that the production of dioxin can be kept to a minimum.

The combustible gas generated at the time of carbonization of combustible wastes is used as a heat source for carbonization or as a heat source for a process in the iron mill. The combustible gas generated at the time of carbonization of refuse solid fuel can be used as a heat source for carbonization by recycling. Since chlorine and other harmful substances are contained in this gas, when this combustible gas is used, equipment for removing these harmful substances is necessary. Also, equipment for removing harmful substances contained in the exhaust gas of carbonization equipment is necessary. If the generated combustible gas is used as a heat source for carbonization by recycling, the equipment for removing harmful substances in the combustible gas can be omitted.

Also, this combustible gas can be used as a heat source in various iron-manufacturing processes (blast furnace, coke oven, sintering furnace, etc.). Since high-performance exhaust gas treating equipment is provided in these iron-manufacturing processes, exhaust gas treating equipment for removing harmful substances contained in the combustible gas need not be provided separately.

Next, an example of the embodiment of the present invention will be described in detail.

The combustible wastes that are used as a raw material especially contain combustible components as compared with general wastes and industrial wastes, and are made up of combustible substances and noncombustible substances. The ratio of combustible substances to noncombustible substances depends greatly on the quality of refuse to be used as a raw material. The combustible substances mainly include paper and plastics, while the noncombustible substances include metals, sand, and the like. Specific combustible wastes include waste paper and used paper, small pieces of wood, waste fibers, waste plastics, garbage, chaff, tofu refuse, coffee grounds, corn refuse, beer cake, orange peel, shredder dust, sewage sludge, and general wastes discharged from general households.

In the most characteristic embodiment among the embodiments in accordance with the present invention, the combustible components in combustible wastes are used at two stages (this is referred to as cascade use), by which more effective use is accomplished, and also harmful impurities are made harmless by the treatment in the iron-manufacturing process.

Specifically, at the first stage, the functionality of carbon matter is utilized. By subjecting combustible wastes to carbonization, the contained combustible substances are carbonized into a porous matter. This is because carbonized porous matter is formed by dehydration of cellulose contained in the combustible substances. The porous carbon matter thus formed is used as an adsorbent, by which the functionality thereof is utilized. Subsequently, at the second stage, the combustible wastes are used as a heat source for the first time, by which combustible wastes can be used more effectively than before. As the third component, coal such as brown coal, coal tar, pitch, activated sludge, oil-based residue, or the like may be added to the combustible wastes. This addition increases the ratio of carbon matter to ash, so that -an increase in performance as an adsorbent can be expected. In particular, as combustible wastes generated in an iron mill, waste coal can be used. Further, mill wastes such as mill scales and dust of an electric dust collector can also be treated at the same time. Conventionally, these mill wastes have been treated by a sintering machine. However, there arises a problem in that chlorides and organic compounds contained in the wastes cause dioxin to be produced. Contrary to this, if the wastes are subjected to carbonization in advance and then are treated by the sintering machine, the production of dioxin can be kept to a minimum.

The carbonization is carried out in an inert atmosphere. Thereby, combustion of carbon matter is restrained. As a result, the yields of carbonized products and the ratio of carbon matter in the carbonized products can be increased, and at the same time, the production of dioxin can be restrained. Also, by carrying out carbonization under the condition that oxygen and water vapor exist, the specific surface area of carbon matter can be increased, and also the diameter of pores can be increased.

As the carbonization furnace, a general industrial furnace can be used. For example, a rotary kiln, fluidized bed furnace, or coke oven can be used. The carbonization temperature is 400°C or higher, preferably being 600°C or higher. If the temperature is 400°C or lower, the specific surface area and adsorption performance necessary as an adsorbent cannot be obtained. Also, when the carbonized products are used as a heat source for a sintering machine, the carbonization is preferably carried out at a temperature of 1000°C or higher to remove a volatile matter in the carbonized products to the utmost. This is because it is said that the volatile matter causes dioxin to be produced. However, the temperature should not exceed 1300°C in order to avoid an operation trouble caused by the partial melting of ash. Also, when the carbonized products are used as a heat source for a sintering machine, the carbonization time should preferably be prolonged to decrease the content of volatile matter to the utmost.

The obtained carbonized products may be further subjected to activation using water vapor etc. By the activation, it can be expected that the specific surface area and pore diameter of carbonized products are increased. However, if the content of ash in the carbonized products is high, attention should be paid because the specific surface area is sometimes decreased inversely by the consumption of carbon matter.

The obtained carbonized products may be blown into exhaust gas from various processes, but are preferably ground as necessary. By grinding, an increase in specific surface area and improvement in dispersibility in exhaust gas can be expected. The ground particle size is 5 mm or smaller, preferably being 1 mm or smaller. Considering the grinding operation, generally, the components having the above-mentioned particle size have only to be contained in a certain ratio. For example, grinding may be performed so that the components having a particle size of 0.8 mm or smaller are contained in a weight ratio of 80% or higher. Further, at the same time or after grinding, ash can be removed by gravity separation or the like. Thereby, an increase in specific surface area of adsorbent per weight can be expected.

Also, the content of volatile matter in the carbonized products is preferably 5% by weight or lower, more preferably being 1% by weight or lower. Thereby, the production of dioxin can be kept to a minimum when the carbonized products are used as a heat source or a raw material.

The exhaust gas from a process into which the obtained carbonized products are blown is exhaust gas discharged from, for example, a refuse incinerator, electric power plant, steel-making electric furnace, scrap melting furnace, or sintering machine in an iron-manufacturing process. The obtained carbonized products are blown mainly to remove dioxin and SOx contained in exhaust gas. The blowing is performed into exhaust gas in front of the dust collector. To blow the carbonized products, a general solid blowing nozzle may be used, and the carbonized products are transferred and blown together with the flow of air, nitrogen, etc. Depending on the kind of exhaust gas, the amount of blown adsorbent is generally about 0.01 to 1.0 g/Nm³ on a basis of carbon mass in adsorbent per 1 Nm³ of exhaust gas, preferably being 0.1 to 0.5 g/Nm³. The carbon mass described herein means a value obtained by excluding ash from adsorbent. The ash content described herein is a value measured according to JIS M8812.

The dust collecting equipment used may be a bag filter or an electric dust collector. The exhaust gas temperature at the time of dust collection is 200°C or lower, preferably being 150°C or lower. The reason for this is that if the temperature is 200°C or higher, the effect of removing dioxin decreases remarkably, and sometimes dioxin is synthesized again and increased.

The carbonized products recovered by the dust collecting equipment may be used for land reclamation, but they are preferably be used as a solid fuel. For example, they can be used as a fuel for power generation, fuel for manufacturing cement, or boiler fuel. Since most of chlorine, which is a volatile impurity, is removed by carbonization, the carbonized products can also be used as a fuel for manufacturing cement. However, when the carbonized products are used as a boiler fuel, they are preferably burned completely to the utmost. If they are not burned completely, there is a possibility of dioxin being produced, so that exhaust gas treatment is needed separately.

In the application as a solid fuel, the use as a heat source for a sintering machine in an iron-manufacturing process is especially effective. The reasons for this are that the combustion temperature is about 1400°C at the maximum, so that the charged dioxin and its precursor are substantially decomposed, that ash is finally turned into slag (turned harmless) by a blast furnace, and that high-volume treatment can be carried out.

Further, the combustible gas generated at the time of carbonization can be used as a heat source for carbonization or as a heat source for in-mill process, and this use is preferable. The in-mill heat source is used for a blast furnace, coke oven, metal heating furnace, heat treating furnace, and annealing furnace. Since these iron-manufacturing facilities each are equipped with high-performance exhaust gas treating equipment, if the combustible gas generated at the time of carbonization is used in these facilities, the need for providing special exhaust gas treating equipment is eliminated. Also, if the combustible gas is used as a heat source for carbonization by recycling, similarly, the need for providing special exhaust gas treating equipment is eliminated.

As described above, in the present invention, the problem of impurities in the prior art is solved, and combustible wastes can be used effectively as an adsorbent, gas fuel, and solid fuel. Further, harmful metals etc. contained in combustible wastes can be turned harmless in the iron-manufacturing process.

Also, as one kind of combustible wastes as explained above, the solid fuel can use an RDF (Refuse Derived Fuel). The RDF is manufactured by grinding, drying, and forming general wastes and industrial wastes, and is made up of combustible substances and noncombustible substances. The ratio of combustible substances to noncombustible substances depends greatly on the quality of refuse to be used as a raw material. The combustible substances mainly include paper and plastics, while the noncombustible substances include metals, sand, and the like. When the refuse derived fuel is used as a boiler fuel or fuel for power generation, the quantity of heat of these combustible components is used.

### (Example 1)

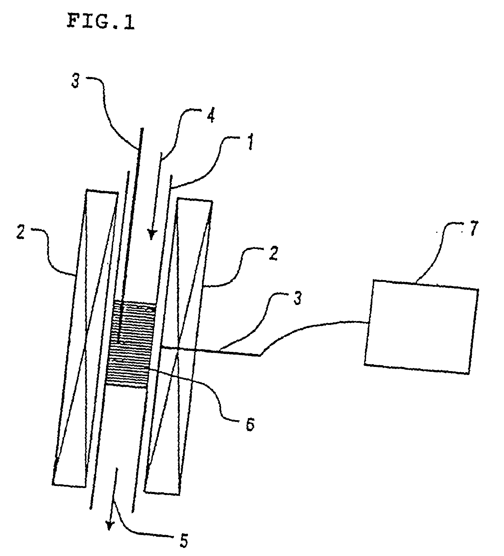

Used paper (water content: 15%, ash content: 5%, combustible substance content: 80%) was used as combustible wastes. The used paper was subjected to carbonization by an electric tube furnace shown in FIG. 1. In FIG. 1, reference numeral 1 denotes a quartz glass tube, 2 denotes an electric heater, 3 denotes a thermocouple, 4 denotes nitrogen gas, 5 denotes carbonization exhaust gas, 6 denotes combustible wastes, and 7 denotes a temperature controller. The combustible wastes (used paper) were put into the electric heater 2, and were subjected to carbonization for 10 minutes by supplying the nitrogen gas 4 at a rate of 50 ml/min and by increasing the carbonization temperature to 1000°C at a rate of 10°C/min. The temperature was measured with the thermocouple 3, and was controlled by the temperature controller 7. The yield of the obtained carbonized products was 22%, the contents of ash and volatile matter measured according to JIS M8812 were 33% and 3.5%, respectively, and the specific surface area measured by the BET method was 215 m²/g.

### (Example 2)

Sewage sludge (water content: 72.9%, ash content: 14.7%, combustible substance content: 12.4%) was used as combustible wastes. Carbonized products were obtained by completely the same method as that in example 1 except that the carbonization temperature was 1100°C. The yield of the obtained carbonized products was 18%, the contents of ash and volatile matter measured according to JIS M8812 were 72% and 0.6%, respectively, and the specific surface area measured by the BET method was 73 m²/g.

### (Example 3)

Carbonized products were obtained by completely the same method as that in example 2 except that brown coal (water content: 15%, ash content: 3.1%, combustible substance content: 81.9%) of 50 in weight percentage with the combustible wastes being 100 was added. The yield of the obtained carbonized products was 24.7%, the contents of ash and volatile matter measured according to JIS M8812 were 49% and 0.5%, respectively, and the specific surface area measured by the BET method was 149 m²/g.

### (Example 4)

Used paper similar to that in example 1 was used as combustible wastes. The used paper was subjected to carbonization by an external heating rotary kiln furnace. The atmosphere in the furnace was made a nitrogen atmosphere, and the temperature therein was kept at 1000°C. Carbonization was carried out by charging sewage sludge through a furnace charge port at a rate of 10 kg/hour and by setting the residence time at 30 minutes. The yield of the obtained carbonized products was 16%, the contents of ash and volatile matter measured according to JIS M8812 were 24% and 0.5%, respectively, and the specific surface area measured by the BET method was 221 m²/g.

### (Example 5)

Carbonized products were obtained by completely the same method as that in example 1 except that an RDF having the properties given in Table 1 was used as combustible wastes. The yield of the obtained carbonized products was 21%, the contents of ash and volatile matter measured according to JIS M8812 were 59% and 0.6% on a dry basis, respectively, and the specific surface area measured by the BET method was 110 m²/g.

**Table 1**

| Water (wt%) | 3.2 |
|---|---|
| Volatile matter (wt%) on dry basis | 72.3 |
| Fixed carbon (wt%) on dry basis | 13.1 |
| Ash (wt%) on dry basis | 14.7 |
| Lower calorific value (kcal) | 3850 |

### (Example 6)

Carbonized products were obtained by completely the same method as that in example 5 except that the carbonization temperature was 1100°C. The yield of the obtained carbonized products was 19%, the contents of ash and volatile matter measured according to JIS M8812 were 61.5% and 0.2% on a dry basis, respectively, and the specific surface area measured by the BET method was 108 m²/g.

### (Example 7)

Carbonized products were obtained by completely the same method as that in example 5 except that brown coal (water content: 15%, ash content: 3.1 db%, combustible substance content: 81.9 db%) of 50 in weight percentage with the combustible wastes being 100 was added. The yield of the obtained carbonized products was 35%, the contents of ash and volatile matter measured according to JIS M8812 were 28% and 0.3% on a dry basis, respectively, and the specific surface area measured by the BET method was 145 m²/g.

### (Example 8)

An RDF similar to that in example 5 was used as combustible wastes. The RDF was subjected to carbonization by an external heating rotary kiln furnace. The atmosphere in the furnace was made a nitrogen atmosphere, and the temperature therein was kept at 1000°C. Carbonization was carried out by charging sewage sludge through a furnace charge port at a rate of 10 kg/hour and by setting the residence time at 30 minutes. The yield of the obtained carbonized products was 23%, the contents of ash and volatile matter measured according to JIS M8812 were 61% and 0.7% on a dry basis, respectively, and the specific surface area measured by the BET method was 126 m²/g.

### (Example 9)

Carbonized products were obtained by completely the same method as that in example 1 except that the carbonization temperature was 400°C. The yield of the obtained carbonized products was 35%, the contents of ash and volatile matter measured according to JIS M8812 were 20% and 7.4%, respectively, and the specific surface area measured by the BET method was 1.5 m²/g.

### (Example 10)

Carbonized products were obtained by completely the same method as that in example 5 except that the carbonization temperature was 600°C. The yield of the obtained carbonized products was 33%, the contents of ash and volatile matter measured according to JIS M8812 were 16% and 4.1% on a dry basis, respectively, and the specific surface area measured by the BET method was 95 m²/g.

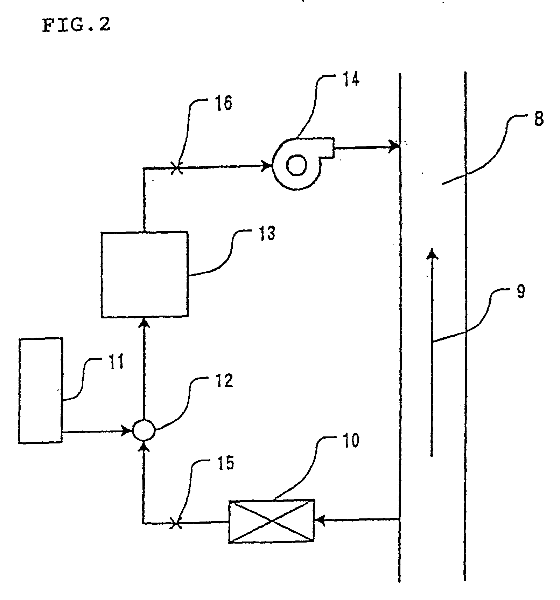

The performance of the obtained adsorbent was evaluated by using a test apparatus shown in FIG. 2. In FIG. 2, reference numeral 8 denotes an exhaust gas flue of a sintering machine, 9 denotes the flow direction of exhaust gas from the sintering machine, 10 denotes a heat exchanger, 11 denotes an adsorbent hopper, 12 denotes an adsorbent blowing port, 13 denotes a bag filter, 14 denotes a blower, and 15 and 16 denote exhaust gas sampling ports.

Actual exhaust gas was sucked from the exhaust gas flue 8 of the sintering machine in a iron-manufacturing process by using the blower 14, and the exhaust gas temperature was controlled to 200°C by using the heat exchanger 10. Carbonized products stored in the adsorbent hopper 11 were discharged quantitatively through the adsorbent blowing port 12, and about 0.5 g (corresponding to 0.38 g/Nm³ on a basis of carbon matter) of carbonized products per 1 Nm³ of exhaust gas were blown. The dust existing originally in exhaust gas and the blown carbonized products were recovered by using the bag filter 13. The concentration of dioxin in exhaust gas taken from the exhaust gas sampling ports 15 and 16 was measured two times, and the mean value was obtained. When the concentration of dioxin in exhaust gas taken from the exhaust gas sampling port 15 was taken as 100, the concentration of dioxin in exhaust gas taken from the exhaust gas sampling port 16 was 12. The dioxin described herein is a general term of polychlorodibenzo-p-dioxin and polychlorodibenzo-furan. The concentration of dioxin means an actual concentration, not a toxicity conversion value.

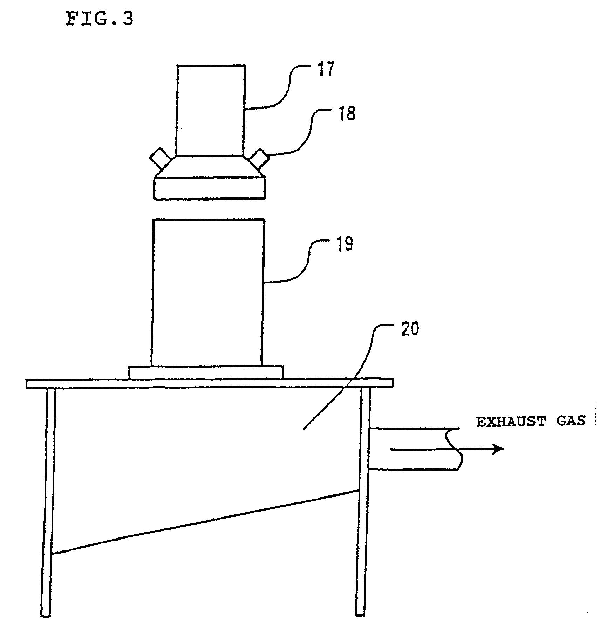

Whether or not the dust and adsorbent recovered by the bag filter 13 can be used as a substitute for coke breeze, which is a heat source in the sintering machine, was examined by using a sintering test apparatus shown in FIG. 3. In FIG. 3, reference numeral 17 denotes an ignition furnace, 18 denotes an ignition burner, 19 denotes a pot, and 20 denotes a wind box. A sample is put in the pot 19, and is ignited by using the ignition burner of the ignition furnace 17. The wind box 20 is provided under the pot 19, from which air is sucked to the outside. The sample is sintered using the above-mentioned apparatus by passing through the same process as that for manufacturing sintered ore.

The recovered adsorbent was used by replacing sintering coke breeze on a basis of equivalent quantity of heat. As a result, even in the case of almost 100% replacement, the product characteristics of the obtained sintered ore were by no means inferior to the case where coke breeze was used.

As described above, in the present invention, combustible wastes are subjected to carbonization, and the obtained carbonized products are blown into exhaust gas from various processes, and recovered by dust collecting equipment to purify the exhaust gas. Therefore, the functionality of carbon matter in combustible components in the combustible wastes can be utilized effectively. Also, chlorine can be removed from the combustible wastes, and dioxins can be prevented from being produced.

Since the combustible wastes contain waste coal powder and activated sludge generated from an iron mill, the production of dioxins generated from the mill wastes is restrained.

Since the recovered carbonized products are used as at least one of a heat source or a raw material in various processes, the combustible components in combustible wastes can be used at two stages.

Since the content of volatile matter in carbonized products is 1% by weight or lower, the production of dioxin can be kept at the minimum when the carbonized products are used as a heat source and/or a raw material.

Since the process in which the carbonized products are used as a heat source and/or a raw material is a sintering machine in an iron-manufacturing process, the charged dioxin and its precursor are substantially decomposed, and ash is finally turned into slag (turned harmless) by a blast furnace, so that harmful substances are not discharged, and also high-volume treatment can be carried out.

Since the temperature at which combustible wastes are subjected to carbonization is 1000°C or higher, a volatile matter in the carbonized products, which causes dioxin to be produced when the carbonized products are used as a raw material for a sintering machine, can be removed.

Since mill scales generated in an iron mill and dust of an electric dust collector are treated by a carbonization furnace for subjecting combustible wastes to carbonization, the production of dioxin from these substances can be kept to a minimum.

Since the combustible gas generated when combustible wastes are subjected to carbonization is used as a heat source for carbonization or as a heat source for a process in the iron mill, the equipment for removing harmful substances in the combustible gas can be omitted.

### Embodiment 2

Embodiment 2 provides a method for treating combustible wastes, comprising the steps of: subjecting combustible wastes to preliminary carbonization; molding preliminarily carbonized products; and subjecting the molded products to carbonization to produce carbonized products.

The preliminary carbonization is preferably carried out at a temperature of 300 to 800°C. If the temperature is lower than 300°C, an unburned state is brought about, and unburned substances vaporize in the step of carbonization after a binder is added, so that the product strength of the carbonized products cannot be obtained. Also, if the preliminary carbonization temperature exceeds 800°C, the moldability after the preliminary carbonization is deteriorated, and the low-temperature strength of molded products decreases. Thus, from the viewpoint of the moldability and low-temperature strength after the preliminary carbonization, the carbonized product strength after the carbonization, etc., the preliminary carbonization temperature is preferably 300 to 800°C, and more preferably 400 to 600°C.

By providing the above-mentioned step of preliminary carbonization, products can be manufactured steadily despite a change in refuse composition due to the kind of combustible wastes and the season. Also, by the control of the preliminary carbonization temperature and time, plastics contained as a component in combustible wastes are melted or decomposed so that dehydrochlorination occurs. The resin subjected to dehydrochlorination is turned into char, and is carbonized by carbonization in the next step. Further, in embodiment 2, the carbonization temperature after the preliminary carbonization is preferably 600 to 1000°C. The reason for this is as described below. If the carbonization temperature at the second stage is lower than 600°C, the performance as activated charcoal cannot be obtained. On the other hand, if the temperature exceeds 1000°C, the increase in performance of activated charcoal as a product reaches the saturated state, so that not only an effect balanced with the quantity of input heat cannot be achieved, but also there is a possibility of the product quality being decreased by partial melting of ash component. Therefore, the carbonization at the second stage should preferably be 600 to 1000°C, more preferably 700 to 900°C.

A binder is preferably added to the combustible wastes subjected to the preliminary carbonization. By adding a binder to the combustible wastes subjected to the preliminary carbonization, the low-temperature strength after molding can be improved, and also the carbonized product strength after being subjected to carbonization can be increased. Also, the addition of a binder decreases the content of ash component in the activated charcoal, with the result that the adsorption performance of activated charcoal can be increased. As specific examples of binder, cement etc. can be cited as an inorganic binder, while coal tar based heavy oil, pitch, coal liquid, oil-based vacuum residue from a specific oil, ethylene bottom oil, reformed oil, etc. can be cited as an organic binder. The binder may be any of these oils or may be a mixture of these oils.

Also, the carbonization is preferably carried out by adding coal or coke to the combustible wastes subjected to preliminary carbonization. By adding coal or coke to the combustible wastes subjected to preliminary carbonization, products can be manufactured steadily despite a change in refuse composition due to the kind of combustible wastes and the season. In particular, the addition of coal or coke contributes to the attainment of the final product strength and to the improvement in properties of the final product. As the coal, caking coal, slightly caking coal, or strongly caking coal is preferable, and highly flowable coal is especially preferable.

It is desirable that the combustible wastes have an O/C atomicity ratio of 0.2 to 0.8 and an H/C atomicity ratio of 0.5 to 2.3. If the O/C ratio is lower than 0.2, most of the carbonized products is gasified, so the carbonization yield decreases. If the O/C ratio exceeds 0.8, the carbonized products become fine, so that the amount of binder in the step of molding increases. Also, if the H/C ratio is lower than 0.5, the manufactured carbonized products are not porous. If the H/C ratio exceeds 2.3, the ratio of fixed carbon to carbonized products decreases.

The combustible wastes are preferably a refuse derived fuel (RDF) in which refuse is solidified. The RDF is manufactured by grinding, drying, and forming general wastes and industrial wastes, and the size thereof ranges from a large size of 15 cm to a particle size of about 2 mm. Also, it generally has a columnar shape, so that it is not only easy to store and transport but also high in flowability. Also, when lime is added in the step of producing, the problem of odor is solved. Also, Ca in lime is effective as a catalyst for gasifying carbonized products, and thus has an effect of improving the performance of carbonized products.

The residue after the preliminary carbonization has almost the same shape as that before the carbonization, and can be used as granular activated charcoal. Further, by adding a binder in the step before carbonization, the physical strength of final products can be increased. As a result, the restriction imposed when activated charcoal is used is lightened, so that applications in various fields for water treatment and gas treatment can be expected.

Also, by using the RDF having relatively stable quality as a raw material, activated charcoal having stable performance can be manufactured easily. Further, in this method, plastics, used paper, scrap wood, etc. that are obtained by classifying general wastes can also be used as a raw material. The shape of these raw materials at the time when they are charged into the preliminary carbonization furnace may be the shape at the time when they are obtained, but it is preferable that in order to make the carbonization properties (degree of carbonization) of the carbonized products after the preliminary carbonization uniform, the raw materials be ground before being supplied into the preliminary carbonization furnace to make the particle size of raw material for preliminary carbonization uniform. Further, in order to avoid the adhesion of the plastics to the inside wall of kiln due to melting at the time of preliminary carbonization, the classified plastics are preferably mixed with used paper and scrap wood at a certain ratio and molded. The classified plastics, used paper, and scrap wood can be molded by an ordinary molding machine. As the molding machine, a ring die type compression molding machine, a biaxial extrusion molding machine, or the like is used. Also, the mixing ratio of classified plastics and used paper plus scrap wood ((classified plastics)/(used paper plus scrap wood)) by weight at the time of molding is 3/97 to 60/40, preferably 10/90 to 50/50. If the percentage of the classified plastics is lower than 3 wt%, the moldability is poor. If it is higher than 60%, the yield of preliminary carbonization is low, and also the specific surface area of carbonized products is small. When used paper and scrap wood are used as a raw material for preliminary carbonization, there is no need for positively providing the step of molding. Also, when the percentage of the classified plastics is lower than 10 wt% as well, there is no fear of adhesion to the inside wall of kiln, so that the step of molding need not be provided. Further, according to this method, the RDF manufactured from general refuse from which plastics are separated can also be used, so that this method is excellent in terms of waste treatment.

The carbonization is preferably carried out in the presence of water vapor. By subjecting the preliminarily carbonized products to carbonization in the presence of water vapor, the specific surface area is increased, and the adsorption performance is improved.

Carbonization gas is preferably used as a heat source for carbonization. Thereby, the carbonization gas can be used effectively in the system of carbonization process. Also, since the quantity of gas discharged from the carbonization process decreases, the purifying equipment for the gas can be made small in size.

The combustible wastes used in the present invention include tofu refuse, garbage, coffee grounds, chaff, beer cake, sludge, used paper, and a refuse derived fuel (RDF). The carbonization is carried out in an inert atmosphere. In the method in accordance with the present invention, oxygen may be present at the time of carbonization, but the combustion of carbon matter is controlled by the treatment in an inert atmosphere. As a result, the yield of carbonized products and the percentage of carbon matter in the carbonized products can be increased. Therefore, the carbonization should preferably be carried out in an inert atmosphere. Also, by carrying out the carbonization in an inert atmosphere, the production of dioxin can be restrained.

As the preliminary carbonization furnace and the carbonization furnace, a general industrial furnace can be used. For example, a rotary kiln, fluidized bed furnace, coke oven, continuous carbonizing furnace, or batch carbonizing furnace is used.

The preliminary carbonization temperature is 300 to 800°C, preferably 400 to 600°C. If the temperature is lower than 300°C, an unburned state is brought about, and unburned substances vaporize in the step of carbonization after a binder is added, so that the product strength of the carbonized products cannot be obtained. If the preliminary carbonization temperature exceeds 800°C, the moldability after the preliminary carbonization is deteriorated, and the low-temperature strength of molded products decreases. Thus, from the viewpoint of the moldability and low-temperature strength after the preliminary carbonization, the carbonized product strength after the carbonization, etc., the preliminary carbonization temperature is preferably 300 to 800°C.

By providing the step of preliminary carbonization, products can be manufactured steadily despite a change in refuse composition due to the kind of combustible wastes and the season. Also, by the control of the preliminary carbonization temperature and time, plastics contained as a component in combustible wastes are melted or decomposed so that dehydrochlorination occurs. The resin subjected to dehydrochlorination is turned into char, and is carbonized by carbonization in the next step.

Although the preliminarily carbonized products maintain the shape taken before the preliminary carbonization, they can be ground and molded by an ordinary molding machine so that they are used as granular activated charcoal. As the molding machine, for example, a ring die type compression molding machine, flat die type compression molding machine, biaxial extrusion molding machine, or briquetting machine is used. The use of a flat die type compression molding machine or a briquetting machine is preferable from the viewpoint of the productivity and product strength. The ring die type compression molding machine has a drawback in that the preliminarily carbonized products of fine particles and binder may fall, so that a binder that is melted by frictional heat or compression heat is needed, and the selection of a binder and the control of manufacturing process are difficult to accomplish. For the biaxial extrusion molding machine, the discharge speeds of molded products discharged from many dies differ, so that it is difficult to obtain products having a uniform size.

By providing the step of grinding after the preliminary carbonization, the power necessary for grinding is decreased. By providing the step of molding after grinding, the intended carbonized products can be manufactured from the RDF having various particle sizes.

The carbonization temperature after the preliminary carbonization is 600 to 1000°C. If the carbonization temperature is lower than 600°C, the performance as activated charcoal cannot be obtained. On the other hand, if the temperature exceeds 1000°C, the increase in performance of activated charcoal as a product reaches the saturated state, so that not only an effect balanced with the quantity of input heat cannot be achieved, but also there is a possibility of the product quality being decreased by partial melting of ash component. For this reason, the carbonization at the second stage should preferably be 600 to 1000°C, more preferably 700 to 900°C.

The carbonization time needs to be about 15 minutes at the minimum when the preliminary carbonization temperature is 450°C, and be about 10 minutes at the minimum when the carbonization temperature is 800°C, depending on the carbonization temperature and the content of water in charged substance.

At the time of carbonization, activation may be accomplished using water vapor etc. By the activation, the specific surface area and pore volume of the carbonized products can be increased. However, when much ash is contained in the carbonized products, attention should be paid because the physical strength is sometimes decreased by the consumption of carbon matter.

According to the above-described embodiment of the present invention, activated charcoal can be manufactured from combustible wastes in a high yield that has been difficult to obtain in the prior art. At the same time, activated charcoal having stable quality and high performance can be manufactured. In particular, activated charcoal in which the distribution of pore diameters differs from the conventional one can be manufactured. The activated charcoal manufactured in the present invention has few micro-pores exceeding 500 Å, and has many meso-pores of 20 Å to 500 Å, so that this activated charcoal is effective in adsorbing harmful substances.

Further, the combustible gas generated at the time of carbonization can be used as a heat source for carbonization. This is preferable because the combustible gas can be used effectively within the system. Also, the combustible gas can be supplied as an energy source for various adjacent processes.

It is especially preferable that as the combustible wastes that are used as a raw material, a refuse derived fuel (RDF) be used. The RDF is made up of combustible substances and noncombustible substances. The ratio of combustible substances to noncombustible substances depends greatly on the kind of RDF (the quality of refuse to be used as a raw material). The combustible substances mainly include paper and plastics, while the noncombustible substances include metals, sand, and the like. In the case of the present invention, these combustible components are used. Therefore, the RDF containing the combustible components in large quantities should preferably be used as a raw material.
Also, a binder and coal or coke may be added to the RDF having been subjected to preliminary carbonization in order to increase the low-temperature strength after molding and the strength of carbonized product and to decrease the content of ash component in the carbonized products. In this case, cement etc. can be cited as an inorganic binder, while coal tar based heavy oil, pitch, coal liquid, oil-based vacuum residue from a specific oil, ethylene bottom oil, reformed oil, etc. can be cited as an organic binder. The binder may be any of these oils or may be a mixture of these oils.
Although the amount of addition differs depending on the intended strength, 5 to 30 wt% with respect to the preliminarily carbonized products is preferable, and 8 to 25 wt% is especially preferable. As the coal, slightly caking coal, caking coal, or strongly caking coal is preferable, and highly flowable coal is especially preferable. Although the amount of addition differs depending on the amount of added binder, 5 to 30 wt% with respect to the preliminarily carbonized products is preferable, and 8 to 25 wt% is especially preferable. As described above, by adding a binder and coal or coke to the combustible wastes subjected to preliminary carbonization, products can be manufactured steadily despite a change in refuse composition due to the kind of combustible wastes and the season.

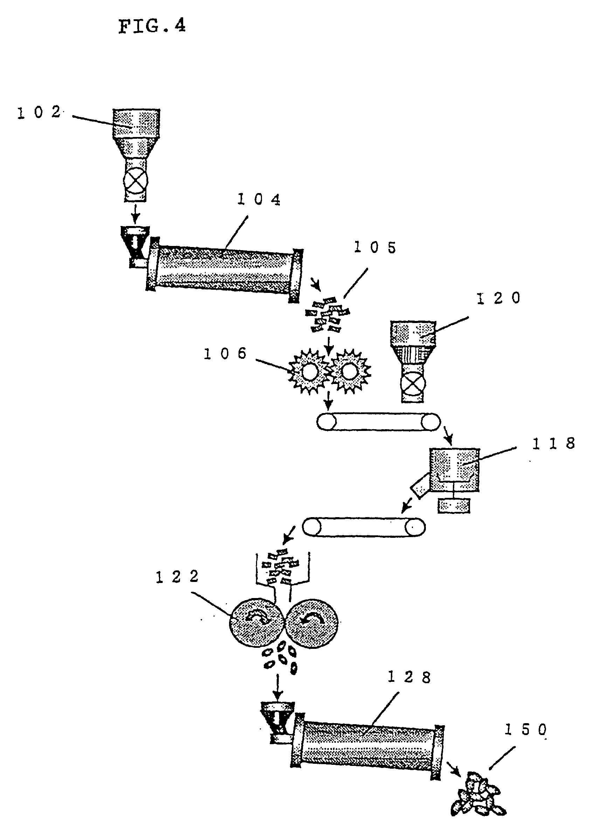

FIG. 4 is a schematic view showing a flow for manufacturing activated charcoal from combustible wastes. A refuse derived fuel (RDF) is put into a raw material supply feeder 102, and is supplied into a preliminary carbonization furnace 104 consisting of a rotary kiln. Preliminarily carbonized products 105 thus obtained are disintegrated into fine particles by a disintegrator 106, and are thoroughly mixed with a binder, which is supplied from a binder supply feeder 120, by a mixer 118. The mixed substance is molded by a briquette molding machine 122, and is subjected to carbonization by a carbonization furnace 128 consisting of a rotary kiln. Thus, the intended activated charcoal 150 is obtained.
The properties of the refuse derived fuel (RDF) used are given in Table 2. By using the RDF given in Table 2, activated charcoal was manufactured according to the flow shown in FIG. 4 with the mixing percentage under the carbonization and molding conditions as given in Table 3. The specific surface area of product was measured by the BET method, and the strength was indicated by Roga's strength. In Tables 3 and 4, the moldability was rated by four grades: excellent (ⓞ), good (○), fair (Δ), and poor (×).

**Table 2**

| Shape | Columnar shape (10 mm dia x 15 mm) |
|---|---|
| Water (wt%) | 3.5 |
| Volatile matter (wt%) on dry basis | 73.2 |
| Fixed carbon (wt%) on dry basis | 12.5 |
| Ash (wt%) on dry basis | 14.3 |
| Lower calorific value (kcal) | 3885 |

**Table 3A**

| | | | Example 1 | Example 2 | Example 3 | Example 4 |
|---|---|---|---|---|---|---|
| Conditions for carbonization | | Preliminary carbonization temperature (°C) | 450 | 450 | 450 | 450 |
| | | Carbonization temperature (°C) | 800 | 800 | 800 | 800 |
| | | Addition of water vapor | Not added | Not added | Not added | Not added |
| Mixing ratio (%) | Raw material | Preliminarily carbonized products | 95 | 85 | 70 | 80 |
| | | Coal | | | | 5 |
| | | Coke | | | | |
| | Binder | Binder A | 5 | 15 | 30 | 15 |
| | | Binder B | | | | |
| | Others | Water (excluded numerical value) | 10 | 10 | 10 | 10 |
| Molding conditions | | Molding temperature (°C) | 100 | 100 | 100 | 100 |
| | | Molding pressure (ton/cm²) | 2 | 2 | 2 | 2 |
| Moldability of preliminarily carbonized products | | Yield (%) | 87 | 90 | 85 | 90 |
| | | Moldability | ○ | ⓞ | ○ | ⓞ |
| Product quality | | Roga's strength (%) | 88 | 93 | 95 | 95 |
| | | Specific surface area (m²/g) | 175 | 172 | 160 | 166 |

**Table 3B**

| | | | Example 5 | Example 6 | Example 7 | Example 8 |
|---|---|---|---|---|---|---|
| Conditions for carbonization | | Preliminary carbonization temperature (°C) | 450 | 450 | 450 | 450 |
| | | Carbonization temperature (°C) | 800 | 800 | 800 | 800 |
| | | Addition of water vapor | Not added | Not added | Not added | Not added |
| Mixing ratio (%) | Raw material | Preliminarily carbonized products | 65 | 80 | 85 | 85 |
| | | Coal | 25 | | | 5 |
| | | Coke | | 5 | | |
| | Binder | Binder A | 10 | 15 | | 15 |
| | | Binder B | | | 15 | |
| | Others | Water (excluded numerical value) | 10 | 10 | 10 | 10 |
| Molding conditions | | Molding temperature (°C) | 100 | 100 | 100 | 100 |
| | | Molding pressure (ton/cm²) | 2 | 2 | 2 | 2 |
| Moldability of preliminarily carbonized products | | Yield (%) | 90 | 87 | 86 | 90 |
| | | Moldability | ⓞ | ○ | ○ | ⓞ |
| Product quality | | Roga 's strength (%) | 98 | 91 | 90 | 89 |
| | | Specific surface area (m²/g) | 155 | 180 | 148 | 185 |

### (Comparative example)

Comparative example is given in Table 4. By using the RDF shown in the embodiment and Table 2, activated charcoal was manufactured in the same way according to the manufacturing flow shown in FIG. 4. The specific surface area of product was measured by the BET method, and the strength was indicated by Roga's strength.

As can be seen from the comparison of Table 3 with Table 4, in all examples, the Roga's strength is 88% or higher, and the specific surface area is 148 m²/g at the minimum, and in most cases, is 160 m²/g or higher. Whereas, in comparative example, the Roga's strength is 78% or lower, and the specific surface area is 150 m²/g at the maximum.

**Table 4**

| | | | Example 1 | Example 2 |
|---|---|---|---|---|
| Conditions for carbonization | | Preliminary carbonization temperature (°C) | 250 | 450 |
| | | Carbonization temperature (°C) | 800 | 1100 |
| | | Addition of water vapor | Not added | Not added |
| Mixing ratio (%) | Raw material | Preliminarily carbonized products | 85 | 85 |
| | | Coal | | |
| | | Coke | | |
| | Binder | Binder A | 15 | 15 |
| | | Binder B | | |
| | Others | Water (excluded numerical value) | 10 | 10 |
| Molding conditions | | Molding temperature (°C) | 100 | 100 |
| | | Molding pressure (ton/cm²) | 2 | 2 |
| Moldability of preliminarily carbonized products | | Yield (%) | 75 | 90 |
| | | Moldability | Δ | ⓞ |
| Product quality | | Roga's strength (%) | 75 | 78 |
| | | Specific surface area (m²/g) | 150 | 142 |

Coal: MORA coal
Binder A: Heavy oil having a softening point of about 50°C
Binder B: Heavy oil having a softening point of about 120°C
Molding method: Briquette molding machine
   Briquette roll: 650 mm dia. x 105 mm
   Mold: 20 mm x 12 mm x 3.5 mm
   Roll gap: 1 mm
Moldability of preliminarily carbonized products:
   Mold release from briquette roll and appearance are rated by four grades.

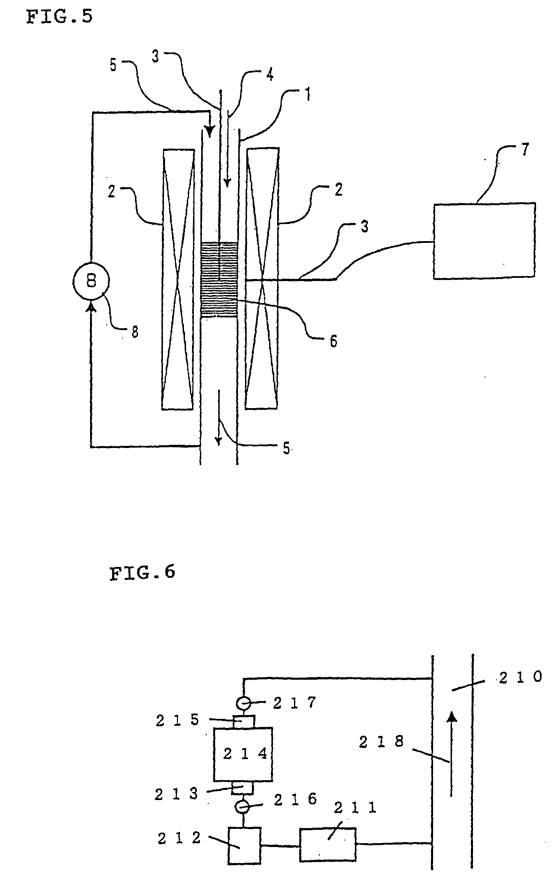

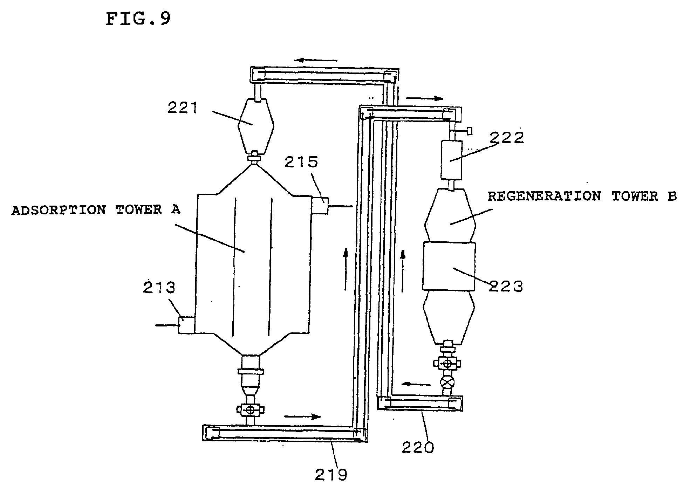

The performance of the obtained adsorbent was evaluated by using a test apparatus shown in FIG. 6. The test apparatus has such a construction as described below. Actual exhaust gas is taken from an exhaust gas flue 210 of a sintering machine in an iron-manufacturing process, and the pressure of the actual exhaust gas is increased by a booster 211. The pressurized actual exhaust gas, passing through a flow regulator 212, is sent to an exhaust gas inlet 213. through which the actual exhaust gas enters an adsorption tower 214. The adsorption tower 214 is filled with activated charcoal, and is made up of an adsorption tower A and a regeneration tower B as shown in FIG. 9. After the actual exhaust gas comes into contact with the activated charcoal filled into the adsorption tower A, it flows to an exhaust gas outlet 215. Also, the activated charcoal supplied from an activated charcoal supply hopper 221 moves from an upper part of the adsorption tower A to a lower part thereof. The activated charcoal discharged from the lower part of the adsorption tower A is sent into the regeneration tower B by conveying equipment 219. The activated charcoal sent into the regeneration tower B is heated by external heating in a heating section 223, by which adsorbed substances are decomposed and released. The regenerated activated charcoal is sent into the adsorption tower A again by conveying equipment 220. Thus, the activated charcoal filled into the adsorption tower 214 circulates between the adsorption tower A and the regeneration tower B by means of a moving bed. The actual exhaust gas discharged from the exhaust gas outlet 215 returns again to the exhaust gas flue of the sintering machine. By using the test apparatus constructed as described above, an adsorption test was conducted by setting the exhaust gas space velocity in the adsorption tower at 700 h⁻¹. The exhaust gas temperature at the time of adsorption test was 120°C. The concentration of dioxin in the exhaust gas taken from exhaust gas sampling ports 216 and 217 was measured n=2 times. The averaged result was that when the concentration of dioxin in the exhaust gas taken from the sampling port 216 was taken as 100, the concentration of dioxin in the exhaust gas taken from the sampling port 217 was 0.4. The dioxin described herein is a general term of polychlorodibenzo-p-dioxin and polychlorodibenzo-furan. Also, the concentration of dioxin means an actual concentration, not a toxicity conversion value. Also, The concentration of SOx in the exhaust gas taken from the exhaust gas sampling ports 216 and 217 was measured n=2 times. The averaged result was that when the concentration of SOx in the exhaust gas taken from the sampling port 216 was taken as 100, the concentration of SOx in the exhaust gas taken from the sampling port 217 was 14. After the completion of adsorption test, the amount of generated powder of -1 mm with respect to the total circulation amount (total amount of activated charcoal discharged from the lower part of the adsorption tower A) was smaller than 0.5%, and therefore activated charcoal having high performance and properties could be obtained by this method.

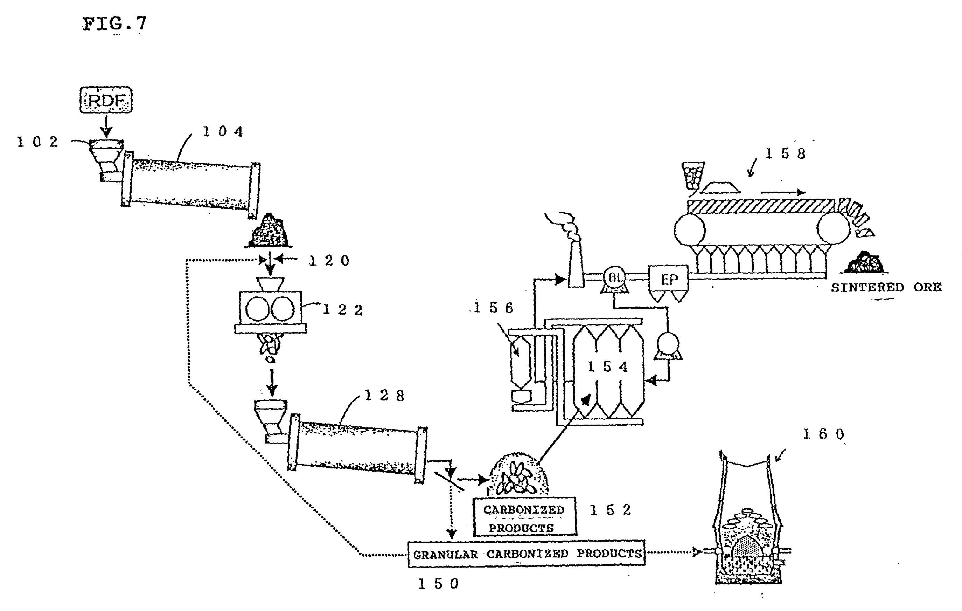

FIG. 7 schematically shows a method for manufacturing carbonized products from a refuse derived fuel (RDF) and using them. A refuse derived fuel (RDF) is charge into the raw material supply feeder 102, and is supplied into the preliminary carbonization furnace 104 consisting of a rotary kiln, by which preliminarily carbonized products are manufactured. A binder 120 is added to the preliminarily carbonized products, and then the preliminarily carbonized products are molded into briquettes by the briquette molding machine 122. The briquettes are subjected to carbonization by the carbonization furnace 128, whereby carbonized products 150 is produced. Granular carbonized products 152 are reused as a raw material for briquettes, or are blown through a tuyere as a fuel for a blast furnace 160. The carbonized products are used to treat exhaust gas generated when sintered ore is manufactured by a sintering machine 158. The exhaust gas is introduced into an adsorption tower 154 filled with carbonized products, and harmful components such as dioxin and sulfur oxides are removed. The carbonized products which have been used and to which harmful components have been adsorbed are regenerated by a regeneration tower 156.

### (Example 10)

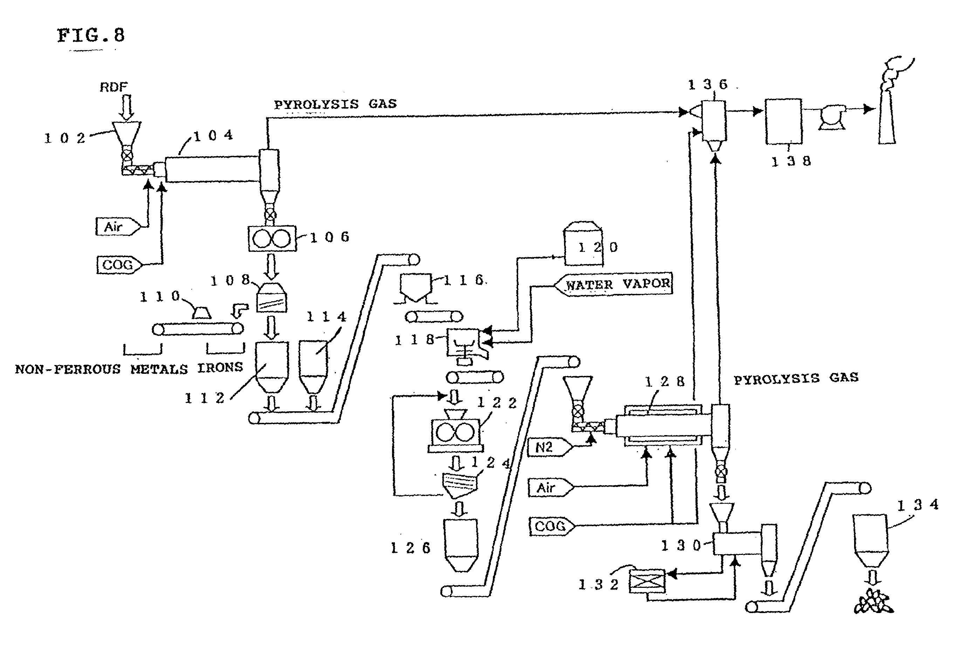

FIG. 8 is a schematic view showing a flow for manufacturing carbonized products from combustible wastes. A refuse derived fuel (RDF) with a diameter of 5 to 25 mm was charged into the raw material supply feeder 102, and was supplied into the preliminary carbonization furnace 104 consisting of a rotary kiln. Preliminary carbonization was carried out at a temperature of 500°C for 30 minutes, by which preliminarily carbonized products and pyrolysis gas were generated. The yield of preliminarily carbonized products was 30 wt%. The preliminarily carbonized products were disintegrated by the disintegrator 106, and were separated into irons and non-ferrous metals by a magnetic separator 110. The preliminarily carbonized products which had been ground and from which irons and non-ferrous metals had been removed were supplied into a buffer bunker 112. Auxiliary raw materials such as coal and coke were stored in an auxiliary raw material bunker 114. The preliminarily carbonized products and the auxiliary raw materials were sent from the buffer bunker 112 and the auxiliary raw material bunker 114 to the mixer 118 through a metering hopper 116. In the mixer 118, the binder 120 was added to the preliminarily carbonized products and the auxiliary raw materials, and mixing was performed while external heating was accomplished by water vapor, by which a mixture was produced. The mixture was molded by the briquette molding machine 122, by which briquettes of an oval shape were manufactured. The manufactured briquettes were screened by a screen 124. Screened briquettes were sent into a buffer bunker 126, and the remaining briquettes were used by recycling. The briquettes were supplied from the buffer bunker 126 into the carbonization furnace 128. Carbonization was carried out at a temperature of 800°C for 30 minutes, by which carbonized products and pyrolysis gas were generated. The yield of carbonized products was 80 wt%. The carbonized products were cooled by a product cooler 130, and were stored in a bunker 134. A cooling medium is cooled by a cooling tower 132, and is reused. The pyrolysis gas generated in the preliminary carbonization furnace 104 and the carbonization furnace 128 was burned in a secondary combustion furnace 136, and was treated in exhaust gas treating equipment.

### Embodiment 3

Embodiment 3 provides a method for manufacturing activated charcoal by subjecting combustible wastes to carbonization at a carbonization temperature of 500 to 1000°C.

In embodiment 3, when combustible wastes are subjected to carbonization, the carbonization temperature is specified so as to be 500 to 1000°C. The reason for this is as described below. If the carbonization temperature is lower than 500°C, the performance as activated charcoal cannot be obtained. On the other hand, if the temperature exceeds 1000°C, the increase in performance of activated charcoal as a product reaches the saturated state, so that not only an effect balanced with the quantity of input heat cannot be achieved, but also there is a possibility of the product quality being decreased by partial melting of ash component. In this temperature range, a temperature of 600 to 800°C is preferable for the above-mentioned reason.

The carbonization is preferably carried out under a pressure of 0.5 to 50 MPa. The reason why the pressure (pressure applied with respect to the atmospheric pressure, that is, pressure based on the standard provided by the atmospheric pressure) at the time of carbonization is set at 0.5 MPa or higher is that the yield of activated charcoal decreases under a pressure lower than this value. Also, the reason why the pressure is set at 50 MPa or lower is that even if the pressure is increased to a pressure higher than this value, an increase in yield is not recognized, so that an increase in pressure to a value exceeding 50 MPa is meaningless. In this pressure range, a pressure of 1 to 30 MPa is preferable.

It is desirable that the combustible wastes be a refuse derived fuel (RDF) in which refuse is solidified. The RDF is manufactured by grinding, drying, and forming general wastes and industrial wastes, and the size thereof ranges from a large size of 15 cm to a particle size of about 2 mm. Also, it generally has a columnar shape, so that it is not only easy to store and transport but also high in flowability. Also, when lime is added in the step of producing, the problem of odor is solved. Further, the residue after the preliminary carbonization has almost the same shape as that before the carbonization, and can be used as granular activated charcoal. As a result, restrictions on the use of activated charcoal are lightened, so that it can be expected that the activated charcoal is used in various fields such as water treatment and gas treatment. Also, by using an RDF having relatively stable quality as a raw material, activated charcoal delivering stable performance can be manufactured easily.

It is preferable that coal or high-carbon refuse be added to a solid fuel in which refuse is solidified to carry out carbonization. By adding coal or high-carbon refuse, a fixed amount of activated charcoal can be manufactured despite a change in amount of the obtained RDF, and also the content of ash in the activated charcoal is decreased, which results in an increase in adsorption performance of activated charcoal. As the high-carbon refuse, coal, used paper, pitch, waste plastics, etc. can be used.

The residue may be ground after the carbonization so that carbon matter and ash are separated. By grinding the residue, ash can be removed easily, and also the specific surface area is increased, so that the use as powdery activated charcoal is possible. Also, by separating the carbon matter and ash after grinding, purer activated charcoal can be obtained.

Carbonization gas is preferably used as a heat source for carbonization. Thereby, the carbonization gas can be used effectively in the system of carbonization process. Also, since the quantity of gas discharged from the carbonization process decreases, the purifying equipment for the gas can be made small in size.

Next, an example of the embodiment of the present invention will be described in detail.

The combustible wastes used in the present invention include tofu refuse, garbage, coffee grounds, chaff, beer cake, sludge, used paper, and a refuse derived fuel. The carbonization is carried out in an inert atmosphere. In the method in accordance with the present invention, oxygen may be present at the time of carbonization, but the combustion of carbon matter is controlled by the treatment in an inert atmosphere. As a result, the yield of carbonized products and the percentage of carbon matter in the carbonized products can be increased. Therefore, the carbonization is preferably carried out in an inert atmosphere. At the same time, the production of dioxin can be restrained.

As the carbonization furnace, an industrial furnace such as an autoclave that can be pressurized can be used. The pressure in the furnace (plus pressure with respect to the atmospheric pressure) is preferably 0.5 to 50 MPa, more preferably being 1 to 30 MPa. If the pressure is lower than 0.5 MPa, the yield of activated charcoal decreases, and if the pressure is higher than 50 MPa, the degree of increase in yield is low. In addition, as the carbonization furnace, a general industrial furnace can be used. For example, a rotary kiln, fluidized bed furnace, coke oven, or continuous carbonizing furnace can be used.

The carbonization temperature is 500 to 1000°C, preferably 600 to 800°C. If the temperature is lower than 500°C, the performance as activated charcoal cannot be obtained. If the temperature is higher than 1000°C, an effect balanced with the quantity of input heat cannot be achieved. Also, there is a possibility of operation trouble caused by partial melting of ash component and degraded product quality. The carbonization time depends on the carbonization temperature. The carbonization time of at least 10 minutes is needed when the carbonization temperature is 600°C and the pressure is 2 MPa.

The carbonized products may be further subjected to activation using water vapor etc. By the activation, the specific surface area and pore diameter of carbonized products can be increased. However, if the content of ash in the carbonized products is high, attention should be paid because the specific surface area is sometimes decreased inversely by the consumption of carbon matter.

In the present invention, the specific surface area is higher and the yield of activated charcoal is higher than in the conventional method. The reason for this is presumed to be that tar and hydrocarbon gas contained in the generated gas precipitate on the surface of the activated charcoal obtained secondarily by carbonization, and easily are pyrolytically decomposed and carbonized under pressure. Also, it is thought that water vapor activating action due to water vapor in the gas takes place at the same time.

When the obtained carbonized products are used as powdery activated charcoal, the products can be ground as necessary. By grinding them, an increase in specific surface area can be expected, and also ash can be removed easily by gravity separation or the like.

As described above, according to the present invention, activated charcoal can be manufactured from combustible wastes in a high yield that has been difficult to obtain in the prior art. Also at the same time, activated charcoal having stable quality and high performance can be manufactured.

Further, the combustible gas generated at the time of carbonization can be used as a heat source for carbonization. This is preferable because the combustible gas can be used effectively within the system. Also, the combustible gas can be supplied as an energy source for various adjacent processes.

It is especially preferable that as the combustible wastes that are used as a raw material, a refuse derived fuel (RDF) be used. The RDF is made up of combustible substances and noncombustible substances. The ratio of combustible substances to noncombustible substances depends greatly on the kind of RDF (the quality of refuse to be used as a raw material). The combustible substances mainly include paper and plastics, while the noncombustible substances include metals, sand, and the like. In the case of the present invention, these combustible components are used. Therefore, the RDF containing the combustible components in large quantities should preferably be used as a raw material.

Also, high-carbon refuse such as coal, used paper, pitch, waste plastics may be added to the RDF. In this case, the coal is preferably relatively young coal such as brown coal. By adding these components, a fixed amount of activated charcoal can be manufactured despite a change in amount of the obtained RDF, and also the content of ash in the activated charcoal is decreased, which results in an increase in adsorption performance of activated charcoal.

As described above, by using a refuse derived fuel (RDF) as a raw material, a problem of difficulties in storing, transporting, and handling a raw material, which has been involved in the prior art, is solved, and granular activated charcoal that has been difficult to obtain in the prior art can be manufactured. Also, at the same time, activated charcoal having stable quality and high performance can be manufactured.

The following is a specific description of examples of the present invention. In these examples, an electric tube furnace as shown in FIG. 1 was used for carbonization.

### (Example 1)

A refuse derived fuel (RDF 6) having the properties given in Table 5 was put into the electric heater 2, and was subjected to carbonization for 10 minutes by supplying the nitrogen gas 4 at a rate of 50 ml/min and by increasing the carbonization temperature to 600°C at a rate of 10°C/min. The temperature was measured with the thermocouple 3, and was controlled by the temperature controller 7. The pressure was kept at the atmospheric pressure.

The obtained carbonized products maintained the granular shape. Also, the yield of activated charcoal was 30%, the content of ash measured according to JIS M8812 was 44%, and the specific surface area measured by the BET method was 116 m²/g.

**Table 5**

| Shape | Columnar shape (9 mm dia x 15 mm) |
|---|---|
| Water (wt%) | 3.2 |
| Volatile matter (wt%) on dry basis | 72.3 |
| Fixed carbon (wt%) on dry basis | 13.1 |
| Ash (wt%) on dry basis | 14.7 |
| Lower calorific value (kcal) | 3850 |

### (Example 2)

Carbonized products were obtained by completely the same method as that in example 1 except that the carbonization temperature was 800°C. The obtained carbonized products maintained the granular shape. Also, the yield of activated charcoal was 25.4%, the content of ash measured according to JIS M8812 was 51.5%, and the specific surface area measured by the BET method was 108 m²/g.

### (Example 3)

A refuse derived fuel (RDF) having the properties given in Table 5 was subjected to carbonization by an autoclave. The RDF was charged into the autoclave, and the atmosphere in the autoclave was replaced with nitrogen to remove oxygen. Thereafter, carbonization was carried out for 10 minutes by increasing the carbonization temperature to 600°C at a rate of 10°C/min. The pressure at this time was 1.7 MPa. The yield of the obtained activated charcoal was 45%, the content of ash measured according to JIS M8812 was 43%, and the specific surface area measured by the BET method was 160 m²/g.

### (Example 4)

Carbonized products were obtained by completely the same method as that in example 3 except that the carbonization temperature was 800°C. The pressure at this time was 2.5 MPa. The yield of activated charcoal was 44.4%, the content of ash measured according to JIS M8812 was 42.5%, and the specific surface area measured by the BET method was 118 m²/g.

### (Example 5)

Carbonized products were obtained by completely the same method as that in example 3 except that nitrogen with a pressure of 0.5 MPa was introduced into the autoclave at ordinary temperature. The pressure at this time was 3.5 MPa. The yield of activated charcoal was 46.4%, the content of ash measured according to JIS M8812 was 41.5%, and the specific surface area measured by the BET method was 190 m²/g.

### (Example 6)

A refuse derived fuel (RDF) having the properties given in Table 5 was subjected to carbonization by an electric tube furnace shown in FIG. 5. The electric tube furnace shown in FIG. 5 differs from the furnace shown in FIG. 1 only in that an exhaust fan 8 is provided to subject carbonization gas to carbonization at the inlet of the tube furnace.

The nitrogen gas 4 was supplied from the upper part at a rate of 50 ml/min, and the carbonization exhaust gas 5 was returned to the upper part of the tube furnace at a rate of 50 ml/min by the exhaust fan 8 to be mixed with the nitrogen gas 4. In this condition, carbonization was carried out for 10 minutes by increasing the carbonization temperature to 600°C at a rate of 10°C/min. The carbonization pressure was the atmospheric pressure. The yield of activated charcoal was 40%, the content of ash measured according to JIS M8812 was 44%, and the specific surface area measured by the BET method was 130 m²/g.

### (Example 7)

Carbonized products were obtained by completely the same method as that in example 6 except that the carbonization temperature was 800°C. The obtained carbonized products maintained the granular shape. Also, the yield of activated charcoal was 40.4%, the content of ash measured according to JIS M8812 was 42.5%, and the specific surface area measured by the BET method was 135 m²/g.

### (Example 8)

A refuse derived fuel, which was obtained by adding waste plastics of 20 wt% with respect to the refuse derived fuel (RDF) having the properties given in Table 5 to the RDF in a pre-molding step, was subjected to carbonization by completely the same method as that in Example 2. The obtained carbonized products maintained the granular shape. Also, the yield of activated charcoal was 31.2%, the content of ash measured according to JIS M8812 was 46%, and the specific surface area measured by the BET method was 120 m²/g.

### (Example 9)

The performance of the obtained adsorbent was evaluated by the test apparatus shown in FIG. 6. The test apparatus has such a construction as described below. Actual exhaust gas is taken from the exhaust gas flue 210 of a sintering machine in an iron-manufacturing process, and the pressure of the actual exhaust gas is increased by the booster 211. The pressurized actual exhaust gas, passing through the flow regulator 212, is sent to the exhaust gas inlet 213, through which the actual exhaust gas enters the adsorption tower 214. The adsorption tower 214 is filled with activated charcoal. After the actual exhaust gas comes into contact with the activated charcoal filled into the adsorption tower, it flows to the exhaust gas outlet 215. The actual exhaust gas discharged from the exhaust gas outlet 215 returns again to the exhaust gas flue of the sintering machine. By using the test apparatus constructed as described above, an adsorption test was conducted by setting the exhaust gas space velocity in the adsorption tower at 700 h⁻¹. The exhaust gas temperature at the time of adsorption test was about 120°C. The concentration of dioxin in the exhaust gas taken from the exhaust gas sampling ports 216 and 217 was measured n=2 times. The averaged result was that when the concentration of dioxin in the exhaust gas taken from the sampling port 216 was taken as 100, the concentration of dioxin in the exhaust gas taken from the sampling port 217 was 0.6. The dioxin described herein is a general term of polychlorodibenzo-p-dioxin and polychlorodibenzo-furan. Also, the concentration of dioxin means an actual concentration, not a toxicity conversion value. Also, The concentration of SOx in the exhaust gas taken from the exhaust gas sampling ports 216 and 217 was measured n=2 times. The averaged result was that when the concentration of SOx in the exhaust gas taken from the sampling port 216 was taken as 100, the concentration of SOx in the exhaust gas taken from the sampling port 217 was 17.

### (Comparative example 1)

Carbonized products were obtained by completely the same method as that in example 1 except that the carbonization temperature was 400°C. The obtained carbonized products maintained the granular shape. Also, the yield of activated charcoal was 47.8%, the content of ash measured according to JIS M8812 was 29.0%, and the specific surface area measured by the BET method was 0.1 m²/g. In this comparative example, since the carbonization temperature was too low, the specific surface area was remarkably small, so that the performance as activated charcoal was not obtained.

### Embodiment 4

Embodiment 4 provides a method for manufacturing activated charcoal from wastes, in which a refuse derived fuel is used as a raw material, and the raw material is subjected to carbonization at a carbonization temperature of 500 to 1000°C.

In embodiment 4, as a raw material used in manufacturing activated charcoal, a refuse derived fuel (RDF) is selected. The RDF is manufactured by grinding, drying, and forming general wastes and industrial wastes, and the size thereof ranges from a large size of 15 cm to a particle size of about 2 mm. Also, it generally has a columnar shape, so that it is not only easy to store and transport but also high in flowability. Also, when lime is added in the step of producing, the problem of odor is solved.

By subjecting such an RDF to carbonization at a carbonization temperature of 500 to 1000°C, granular activated charcoal is manufactured. Specifically, the residue after the carbonization has almost the same shape as that before the carbonization, and can be used as granular activated charcoal.

The reason why the carbonization temperature is set at 500 to 1000°C in this method is as described below. If the temperature is lower than 500°C, the performance as activated charcoal cannot be obtained. Also, even if the temperature is higher than 1000°C, the performance of activated charcoal does not increase, so that not only the thermal efficiency is decreased, but also ash component is partially melted, which may results in the occurrence of operation trouble and the degradation in quality of activated charcoal. From these considerations, the carbonization temperature should preferably be 600 to 800°C. The carbonization time depends on the carbonization temperature, and can be determined appropriately by a simple experiment performed by a person skilled in the art. The carbonization time needs to be 10 minutes at the minimum when the carbonization temperature is 600°C.

Also, by using the RDF having relatively stable quality as a raw material, activated charcoal having stable performance can be manufactured easily. Further, according to this method, the RDF manufactured from refuse which is obtained by separating plastics from general wastes can also be used, and therefore this method is excellent from the viewpoint of waste treatment.

In the step before carbonization, the refuse derived fuel is preferably impregnated with a binder.

For the activated charcoal manufactured from RDF, in the case of being subjected to industrial carbonization, that is, carbonization using, for example, a rotary kiln furnace or a fluidized bed furnace, even if the activated charcoal is compression molded in advance, the shape thereof is impaired physically, and thus the yield as granular activated charcoal decreases. By adding a binder to the refuse derived fuel before the step of carbonization, the binder plays a role of an adhesive for binding individual wastes to each other, so that the impairment of shape in the step of carbonization can be kept to a minimum.

Also, by impregnating a binder in the step before carbonization, the content of ash component in the activated charcoal is lowered. Consequently, not only the adsorption performance of activated charcoal can be increased, but also the physical strength of activated charcoal can be enhanced. As a result, the restriction imposed when activated charcoal is used is lightened, so that applications in various fields for water treatment and gas treatment can be expected. Also, even when the amount of RDF used changes, a fixed amount of activated charcoal can be manufactured.

It is desirable that the step of impregnating the refuse derived fuel with a binder be performed before the step of compression molding the refuse derived fuel. In this case, the binder plays a role of an adhesive for binding individual wastes to each other, so that the impairment of shape of refuse derived fuel in the step of carbonization can be kept to a minimum.

The carbonization is preferably carried out in the presence of water vapor. By carrying out the carbonization in the presence of water vapor, the specific surface area and pore diameter of carbonized products can be increased.

Activation is preferably accomplished after the carbonization. The activation is accomplished by using water vapor etc. Thereby, the specific surface area and pore diameter of carbonized products can be increased.

Carbonization gas should preferably be used as a heat source for carbonization. By using carbonization gas as a heat source for carbonization, the amount of other heat sources used for carbonization can be decreased, and also the need for special gas purifying equipment for carbonization gas is eliminated.

The following is a description of an example of the embodiment of the present invention.

The RDF used as a raw material is made up of combustible substances and noncombustible substances. The ratio of combustible substances to noncombustible substances depends greatly on the kind of RDF (the quality of refuse to be used as a raw material). The combustible substances mainly include paper and plastics, while the noncombustible substances include metals, sand, and the like. Specific combustible wastes include waste paper and used paper, small pieces of wood, waste fibers, waste plastics, garbage, chaff, tofu refuse, coffee grounds, corn refuse, beer cake, orange peel, shredder dust, sewage sludge, and general wastes discharged from general households. In the case of the present invention, these combustible components are used. Therefore, the RDF containing the combustible components in large quantities should preferably be used as a raw material.
Also, a binder may be added to the RDF. For the binder used, cement etc. can be cited as an inorganic binder, while coal tar based heavy oil, pitch, coal liquid, oil-based vacuum residue from a specific oil, ethylene bottom oil, reformed oil, etc. can be cited as an organic binder. The binder may be any of these oils or may be a mixture of these oils. By impregnating these components, even when the amount of RDF used changes, not only a fixed amount of activated charcoal can be manufactured, but also the content of ash component in activated charcoal can be lowered, with the result that the adsorption performance of activated charcoal can be increased.

As the method for impregnation, the general method can be used. Also, there can be used a method in which a refuse derived fuel or a refuse derived fuel before the step of compression molding is dipped in a melted binder for a certain period of time. By the control of dipping temperature and time, plastics contained as an RDF component are melted or decomposed and thus dehydrochlorination occurs. The resin subjected to dehydrochlorination is turned into char, and is carbonized by carbonization in the next step.

Also, the method for the addition of a binder and the method for compression molding after the addition of binder are not subject to any special restriction. For example, the carbonized products can be molded into a desired shape such as a pellet by being mixed, heated, and pressurized using a molding machine such as an extruder. Although the heating condition differs depending on the oil used, the heating temperature is preferably the lowest temperature that can achieve softening and melting.

The carbonization is carried out in an inert atmosphere. Oxygen may be present, but by carrying out the carbonization in an inert atmosphere, the combustion of carbon matter is restrained, with the result that the yield of carbonized product and the percentage of carbon matter in carbonized products can be increased. At the same time, the production of dioxin can be restrained. As the carbonization furnace, a general industrial furnace can be used. For example, a rotary kiln, fluidized bed furnace, coke oven, or continuous carbonizing furnace can be used.

The carbonization temperature is 500 to 1000°C, preferably 600 to 800°C. If the temperature is lower than 500°C, the performance as activated charcoal cannot be obtained. If the temperature is higher than 1000°C, the performance of activated charcoal does not increase, so that an effect balanced with the quantity of input heat cannot be achieved. Also, there is a possibility of operation trouble caused by partial melting of ash component and degraded product quality. Depending on the carbonization temperature, carbonization time of at least 10 minutes is needed when the carbonization temperature is 600°C.

The carbonization may be carried out in the presence of water vapor, or the carbonized products may further be subjected to activation using water vapor etc. By this treatment, the specific surface area and the pore diameter of carbonized products are increased. However, if the content of ash in the carbonized products is high, attention should be paid because the specific surface area is sometimes decreased inversely by the consumption of carbon matter.

Even if the obtained carbonized products are used for equipment such as a fluidized bed, the carbonized products have a low physical powdering percentage and a high strength. However, when the carbonized products are used as powdery activated charcoal, they can be ground as necessary. By the grinding, an increase in specific surface area is expected, and ash can be removed easily by gravity separation or the like.

Further, the combustible gas generated at the time of carbonization is preferable because it can be used as a heat source for carbonization. Also, the combustible gas can be supplied as energy for various adjacent processes.

In the above-mentioned embodiment of the present invention, by using a refuse derived fuel (RDF) as a raw material, a problem of difficulties in storing, transporting, and handling a raw material, which has been involved in the prior art, is solved, and granular activated charcoal that has been difficult to obtain in the prior art can be manufactured. Also, at the same time, activated charcoal having stable quality and high performance can be manufactured.

Next, examples of the present invention will be described specifically together with comparative examples. In these examples and comparative examples, an electric tube furnace as shown in FIG. 5 was used for carbonization.

### (Example 1)

A refuse derived fuel (RDF 6) having the properties given in Table 6 was put into the electric heater 2, and was subjected to carbonization for 10 minutes by supplying the nitrogen gas 4 from the upper part at a rate of 50 ml/min and by increasing the carbonization temperature to 600°C at a rate of 10°C/min. The temperature was measured with the thermocouple 3, and was controlled by the temperature controller 7. The obtained carbonized products maintained the granular shape. Also, the yield of activated charcoal was 27%, the content of ash measured according to JIS M8812 was 45%, and the specific surface area measured by the BET method was 114 m²/g. Also, the Roga's test strength ([weight of carbonized products remaining on the screen after the test]/[weight of carbonized product before the test] x 100) measured according to JIS M8801 was 60%.

**Table 7**

| Shape | Columnar shape (9 mm dia x 15 mm) |
|---|---|
| Water (wt%) | 3.2 |
| Volatile matter (wt%) on dry basis | 72.3 |
| Fixed carbon (wt%) on dry basis | 13.1 |
| Ash (wt%) on dry basis | 14.7 |
| Lower calorific value (kcal) | 3850 |

### (Example 2)

A refuse derived fuel (RDF 6) having the properties given in Table 6 before compression molding was impregnated with 10 vol% of pitch before compression molding, was put into the electric heater 2, and was subjected to carbonization for 10 minutes by supplying the nitrogen gas 4 from the upper part at a rate of 50 ml/min and by increasing the carbonization temperature to 600°C at a rate of 10°C/min. The temperature was measured with the thermocouple 3, and was controlled by the temperature controller 7.

The obtained carbonized products maintained the granular shape. Also, the yield of activated charcoal was 40%, the content of ash measured according to JIS M8812 was 40%, and the specific surface area measured by the BET method was 152 m²/g. Also, the Roga's test strength measured according to JIS M8801 was 88%.

### (Example 3)

Carbonized products were obtained by completely the same method as that in example 2 except that the carbonization temperature was 800°C. The obtained carbonized products maintained the granular shape. Also, the yield of activated charcoal was 35%, the content of ash measured according to JIS M8812 was 46%, and the specific surface area measured by the BET method was 148 m²/g. Also, the Roga's test strength measured according to JIS M8801 was 84%.

### (Example 4)

A refuse derived fuel (RDF 6) having the properties given in Table 6 before compression molding, which was impregnated with 10 vol% of pitch before compression molding, was subjected to carbonization by completely the same method as that in example 2 to obtain carbonized products. The obtained carbonized products maintained the granular shape. Also, the yield of activated charcoal was 40%, the content of ash measured according to JIS M8812 was 36%, and the specific surface area measured by the BET method was 152 m²/g. Also, the Roga's test strength measured according to JIS M8801 was 97%.

### (Example 5)

A refuse derived fuel (RDF 6) having the properties given in Table 6 before compression molding, which was impregnated with 10 vol% of pitch before compression molding, was subjected to carbonization by completely the same method as that in example 3 to obtain carbonized products. The obtained carbonized products maintained the granular shape. Also, the yield of activated charcoal was 35%, the content of ash measured according to JIS M8812 was 40%, and the specific surface area measured by the BET method was 136 m²/g. Also, the Roga's test strength measured according to JIS M8801 was 93%.

### (Example 6)

Carbonized products were obtained by completely the same method as that in example 2 except that the carbonization temperature was 800°C and the carbonization atmosphere was nitrogen gas containing 10% of water vapor. The obtained carbonized products maintained the granular shape. Also, the yield of activated charcoal was 34%, the content of ash measured according to JIS M8812 was 46%, and the specific surface area measured by the BET method was 162 m²/g. Also, the Roga's test strength measured according to JIS M8801 was 83%.

### (Example 7)

Carbonized products were obtained by completely the same method as that in example 2 except that the carbonization temperature was 800°C. The obtained carbonized products were activated for 15 minutes by nitrogen gas containing 10% of water vapor at a temperature of 850°C. The obtained activated products maintained the granular shape. Also, the yield of activated charcoal was 32%, the content of ash measured according to JIS M8812 was 47%, and the specific surface area measured by the BET method was 173 m²/g. Also, the Roga's test strength measured according to JIS M8801 was 83%.

### (Example 8)

Carbonized products were obtained by completely the same method as that in example 2 except that the RDF was impregnated with pitch after compression molding. The obtained carbonized products maintained the granular shape. Also, the yield of activated charcoal was 40%, the content of ash measured according to JIS M8812 was 40%, and the specific surface area measured by the BET method was 152 m²/g. Also, the Roga's test strength measured according to JIS M8801 was 88%.

### (Example 9)

Carbonized products were obtained by completely the same method as that in example 8 except that the carbonization temperature was 800°C. The obtained carbonized products maintained the granular shape. Also, the yield of activated charcoal was 35%, the content of ash measured according to JIS M8812 was 46%, and the specific surface area measured by the BET method was 146 m²/g. Also, the Roga's test strength measured according to JIS M8801 was 80%.

### (Example 10)

Carbonized products were obtained by completely the same method as that in example 8 except that the amount of impregnated pitch was 50 vol%. The obtained carbonized products maintained the granular shape. Also, the yield of activated charcoal was 40%, the content of ash measured according to JIS M8812 was 36%, and the specific surface area measured by the BET method was 150 m²/g. Also, the Roga's test strength measured according to JIS M8801 was 95%.

### (Example 11)

Carbonized products were obtained by completely the same method as that in example 9 except that the amount of impregnated pitch was 50 vol%. The obtained carbonized products maintained the granular shape. Also, the yield of activated charcoal was 35%, the content of ash measured according to JIS M8812 was 40%, and the specific surface area measured by the BET method was 135 m²/g. Also, the Roga's test strength measured according to JIS M8801 was 90%.

### (Example 12)

Before compression molding, 20 wt% of pitch was added to refuse having the properties given in Table 7 before compression molding, which was obtained by separating plastics from general wastes, and the refuse was molded by a ring die type molding machine. The molded products were strong ones maintaining the columnar shape. The molded products were put into the electric heater 2, and were subjected to carbonization for 10 minutes by supplying the nitrogen gas 4 from the upper part at a rate of 50 ml/min and by increasing the carbonization temperature to 800°C at a rate of 10°C/min. The temperature was measured with the thermocouple 3, and was controlled by the temperature controller 7.

The obtained carbonized products maintained the granular shape. Also, the yield of activated charcoal was 37%, the content of ash measured according to JIS M8812 was 30%, and the specific surface area measured by the BET method was 150 m²/g. Also, the Roga's test strength measured according to JIS M8801 was 86%.

**Table 7**

| Shape | Columnar shape (9 mm dia x 15 mm) |
|---|---|
| Water (wt%) | 2.5 |
| Volatile matter (wt%) on dry basis | 65.4 |
| Fixed carbon (wt%) on dry basis | 19.5 |
| Ash (wt%) on dry basis | 8.8 |
| Lower calorific value (kcal) | 3345 |

### (Comparative example 1)

Carbonized products were obtained by completely the same method as that in example 2 except that the carbonization temperature was 400°C. The obtained carbonized products maintained the granular shape. Also, the yield of activated charcoal was 47%, the content of ash measured according to JIS M8812 was 28%, and the specific surface area measured by the BET method was 0.2 m²/g. Also, the Roga's test strength measured according to JIS M8801 was 72%. Specifically, in this comparative example, the carbonization temperature was too low, so that the specific surface area was remarkably small, and thus the performance as activated charcoal was not obtained.

### (Comparative example 2)

Carbonized products were obtained by completely the same method as that in example 8 except that the carbonization temperature was 400°C. The obtained carbonized products maintained the granular shape. Also, the yield of activated charcoal was 47%, the content of ash measured according to JIS M8812 was 28%, and the specific surface area measured by the BET method was 0.1 m²/g. Also, the Roga's test strength measured according to JIS M8801 was 70%. In this comparative example as well, the carbonization temperature was too low, so that the specific surface area was remarkably small, and thus the performance as activated charcoal was not obtained.

### (Comparative example 3)

Carbonized products were obtained by completely the same method as that in example 12 except that refuse having the properties given in Table 7 before compression molding, which was obtained by separating plastics from general wastes, was used (no binder was added). The molded products barely maintained the columnar shape, and were in a state of easily being taken apart into pieces by hand. Some obtained carbonized products maintained the columnar shape, but most of them were in a powdery form. Also, the yield of activated charcoal was 30%, the content of ash measured according to JIS M8812 was 32%, and the specific surface area measured by the BET method was 110 m²/g. Also, the Roga's test strength measured according to JIS M8801 was 65%. In this comparative example, since plastic components, which are melted by frictional heat and compression heat at the time of molding and play a role of a binder, had been removed by classification, although the carbonized products have some degree of specific surface area, the strength of carbonized products was not obtained.

### (Example 13)

The performance of the obtained adsorbent was evaluated by using the test apparatus shown in FIG. 6. The test apparatus has such a construction as described below. Actual exhaust gas is taken from the exhaust gas flue 210 of a sintering machine in an iron-manufacturing process, and the pressure of the actual exhaust gas is increased by the booster 211. The pressurized actual exhaust gas, passing through the flow regulator 212, is sent to the exhaust gas inlet 213, through which the actual exhaust gas enters the adsorption tower 214. The adsorption tower 214 is filled with activated charcoal, and is made up of the adsorption tower A and the regeneration tower B as shown in FIG. 9. After the actual exhaust gas comes into contact with the activated charcoal filled into the adsorption tower A, it flows to the exhaust gas outlet 215. Also, the activated charcoal in the adsorption tower A moves from an upper part of the adsorption tower A to a lower part thereof. The activated charcoal discharged from the lower part of the adsorption tower A is sent into the regeneration tower B by the conveying equipment 219. The activated charcoal sent into the regeneration tower B is heated by external heating in the heating section 223, by which adsorbed substances are decomposed and released. The regenerated activated charcoal is sent into the adsorption tower A again by the conveying equipment 220. Thus, the activated charcoal filled into the adsorption tower 214 circulates between the adsorption tower A and the regeneration tower B by means of a moving bed. The actual exhaust gas discharged from the exhaust gas outlet 215 returns again to the exhaust gas flue of the sintering machine. By using the test apparatus constructed as described above, an adsorption test was conducted by setting the exhaust gas space velocity in the adsorption tower at 700 h⁻¹. The exhaust gas temperature at the time of adsorption test was about 120°C. The concentration of dioxin in the exhaust gas taken from the exhaust gas sampling ports 216 and 217 was measured n=2 times. The averaged result was that when the concentration of dioxin in the exhaust gas taken from the sampling port 216 was taken as 100, the concentration of dioxin in the exhaust gas taken from the sampling port 217 was 0.5. The dioxin described herein is a general term of polychlorodibenzo-p-dioxin and polychlorodibenzo-furan. Also, the concentration of dioxin means an actual concentration, not a toxicity conversion value. Also, The concentration of SOx in the exhaust gas taken from the exhaust gas sampling ports 216 and 217 was measured n=2 times. The averaged result was that when the concentration of SOx in the exhaust gas taken from the sampling port 216 was taken as 100, the concentration of SOx in the exhaust gas taken from the sampling port 217 was 15. After the completion of adsorption test, the amount of generated powder of -1 mm with respect to the total circulation amount (total amount of activated charcoal discharged from the lower part of the adsorption tower A) was smaller than 0.5%, and therefore activated charcoal having high performance and properties could be obtained by this method.

## Claims

1. A method for treating combustible wastes, comprising the steps of:
carbonizing combustible wastes to obtain carbonized products and combustible gas; and
using said carbonized products to purify exhaust gas from a process.

2. The method of claim 1, wherein said combustible wastes contain at least one selected from the group consisting of paper and plastics.

3. The method of claim 2, wherein said combustible wastes further contain at least one selected from the group consisting of coal, coal tar, pitch, activated sludge, and oil-based residue.

4. The method of claim 2, wherein said combustible wastes further contain at least one selected from the group consisting of mill scales and dust of an electric dust collector.

5. The method of claim 1, wherein said step of carbonizing comprises carbonizing said combustible wastes at a carbonization temperature of 400°C or more.

6. The method of claim 5, wherein said step of carbonizing comprises carbonizing said combustible wastes at a carbonization temperature of 600°C or more.

7. The method of claim 6, wherein said step of carbonizing comprises carbonizing said combustible wastes at a carbonization temperature of 1000 to 1300°C.

8. The method of claim 1, wherein said step of carbonizing comprises carbonizing said combustible wastes in an inert atmosphere.

9. The method of claim 1, wherein said step of carbonizing comprises:
carbonizing said combustible wastes to obtain carbonized products and combustible gas; and
activating said carbonized products.

10. The method of claim 1, further comprising the step of grinding said carbonized products so as to have a particle size of 5 mm or smaller.

11. The method of claim 1, wherein said carbonized products have a volatile matter of 5 wt% or less.

12. The method of claim 11, wherein said carbonized products have a volatile matter of 1 wt% or less.

13. The method of claim 1, wherein said exhaust gas from a process is exhaust gas from one process selected from the group consisting of a refuse incinerator, electric power plant, steel-making electric furnace, scrap melting furnace, and sintering machine for manufacturing iron.

14. The method of claim 1, further comprising the step of using the recovered carbonized products as a fuel or a raw. material.

15. The method of claim 13, wherein said fuel is a fuel used for manufacturing sintered ore in a sintering machine for iron making.

16. The method of claim 1, further comprising the step of using said combustible gas as a heat source for carbonization or iron-manufacturing process.

17. The method of claim 1, wherein said combustible wastes are a refuse derived fuel (RDF).

18. The method claim 1, wherein
said combustible wastes contain at least one selected from the group consisting of paper and plastics;
said combustible wastes further contain at least one selected from a group consisting of mill scales and dust of an electric dust collector; and
said step of carbonizing comprises carbonizing combustible wastes at a carbonization temperature of 1000 to 1300°C.

19. A method for treating combustible wastes, comprising the steps of:
preliminarily carbonizing said combustible wastes to produce preliminarily carbonized products;
molding said preliminarily carbonized products to produce molded products; and
carbonizing said molded products to produce carbonized products.

20. The method of claim 19, wherein said step of preliminarily carbonizing comprises preliminarily carbonizing combustible wastes at a temperature of 300 to 800°C.

21. The method of claim 19. wherein said step of molding comprises molding said preliminarily carbonized products by a briquetting machine to produce briquettes.

22. The method of claim 19, wherein said step of carbonizing comprises carbonizing said molded products to at a temperature of 600 to 1000°C.

23. The method of claim 19, wherein said step of carbonizing comprises carbonizing said molded products in the presence of water vapor.

24. The method of claim 19, wherein said step of carbonizing comprises carbonizing said molded products by using carbonization gas as a heat source.

25. The method of claim 19, wherein said combustible wastes are combustible wastes containing a refuse derived fuel.

26. The method of claim 19, wherein said combustible wastes are a refuse derived fuel.

27. The method of claim 19, wherein said combustible wastes have an O/C atomicity ratio of 0.2 to 0.8 and an H/C atomicity ratio of 0.5 to 2.3.

28. The method of claim 19, further comprising the steps of:
disintegrating said preliminarily carbonized products; and
removing iron and nonferrous metals from the disintegrated preliminarily carbonized products.

29. The method of claim 19, further comprising the step of adding coal or coke to said preliminarily carbonized products.

30. The method of claim 19, further comprising the step of adding and mixing a binder to and with said preliminarily carbonized products.

31. The method of claim 19, further comprising the step of using said carbonized products as an agent for treating exhaust gas.

32. The method of claim 19, further comprising the steps of:
removing granular carbonized products from said carbonized products; and
returning said granular carbonized products to said step of molding the preliminarily carbonized products.

33. The method of claim 19, further comprising the steps of:
removing granular carbonized products from said carbonized products; and
using said granular carbonized products as a raw material blown as a fuel.

34. Activated charcoal manufactured by the method for treating combustible wastes according to claim 19.

35. The carbonized products of claim 34, wherein said activated charcoal has a Roga's strength of 88% or higher and a specific surface area of 148 m²/g or larger.

36. A method for treating combustible wastes, comprising the steps of:
carbonizing said combustible wastes at a temperature of 500 to 1000°C; and
obtaining carbonized products and carbonization gas after the carbonization.

37. The method of claim 36, wherein said carbonizing is carried out under a pressure of 0.5 to 50 MPa.

38. The method of claim 36, wherein said combustible wastes are a solid fuel in which refuse is solidified.

39. The method of claim 36, wherein said combustible wastes comprises a solid fuel in which refuse is solidified and coal or high-carbon refuse.

40. The method of claim 36, wherein the residue obtained by carbonization is ground to separate a carbon matter and ash.

41. The method of claim 36, further comprising the step of using said carbonization gas as a heat source for carbonization.

42. A method for treating combustible wastes, comprising the steps of:
preparing a refuse derived fuel;
carbonizing said refuse derived fuel at a temperature of 500 to 1000°C; and
obtaining carbonized products and carbonization gas after the carbonizing.

43. The method of claim 42, wherein said step of preparing the refuse derived fuel comprises impregnating said refuse derived fuel with a binder.

44. The method of claim 42, wherein said step of preparing the refuse derived fuel comprises impregnating said refuse derived fuel with a binder and compression molding said refuse derived fuel.

45. The method of claim 42, wherein said step of carbonizing comprises carbonizing said refuse derived fuel in the presence of water vapor.

46. The method of claim 42, further comprising the step of activating said carbonized products.

47. The method of claim 42, further comprising the step of using said carbonization gas as a heat source for carbonizing.

48. Activated charcoal manufactured by the method for treating combustible wastes according to claim 42.
